(19)

Europäisches
Patentamt
European
Patent Office
Office européen
des brevets

(11)  **EP 1 924 116 A2**

(12)  **EUROPEAN PATENT APPLICATION**

(43) Date of publication:
**21.05.2008  Bulletin 2008/21**

(51) Int Cl.:
***H04Q 7/38*** *(2006.01)*

(21) Application number: **07024302.7**

(22) Date of filing: **02.09.2004**

(84) Designated Contracting States:
**AT BE BG CH CY CZ DE DK EE ES FI FR GB GR
HU IE IT LI LU MC NL PL PT RO SE SI SK TR**

(30) Priority: **02.09.2003  KR 20030061251**

(62) Document number(s) of the earlier application(s) in
accordance with Art. 76 EPC:
**04020868.8 / 1 513 363**

(71) Applicant: **Samsung Electronics Co., Ltd.
Suwon-si
Gyeonggi-do 443-742 (KR)**

(72) Inventors:
 • **Kwon, Hwan-Joon
  Suwon-si
  Gyeonggi-do (KR)**
 • **Kim, Dong-Hee
  Suwon-si
  Gyeonggi-do (KR)**

 • **Kim, Youn-Sun
  unknown (KR)**
 • **Bae, Beom-Sik
  Suwon-si
  Gyeonggi-do (KR)**
 • **Han, Jin-Kyu
  Suwon-si
  Gyeonggi-do (KR)**

(74) Representative: **Grünecker, Kinkeldey,
Stockmair & Schwanhäusser
Anwaltssozietät
Leopoldstrasse 4
80802 München (DE)**

Remarks:
This application was filed on 14 12 2007 as a
divisional application to the application mentioned
under INID code 62.

(54)  **Method for providing state information of a mobile station in a mobile communication system**

(57)  A method of providing state information of a mobile station in a mobile communication system which provides a data service between the mobile station and a base station and transmits information on a maximum data rate available for the mobile station and information on the amount of data stored in a buffer of the mobile station in a reverse direction, such that the base station determines a reverse data rate of the mobile station based on channel state information transmitted in the reverse direction. The mobile station determines information on the amount of data stored in its buffer based on information transmitted from the base station,. The mobile station quantizes the determined information on the amount of data stored in the buffer, and transmits the quantized information to the base station.

FIG.1

**Description**

**BACKGROUND OF THE INVENTION**

1. Field of the Invention

The present invention relates generally to a method for providing state information of a mobile station in a mobile communication system, and in particular, to a method for providing reverse state information of a mobile station.

2. Description of the Related Art

Generally, in a mobile communication system, data transmission is divided into forward data transmission and reverse data transmission. Forward data transmission is data transmission from a base station (BTS) to a mobile station, and reverse data transmission is data transmission from a mobile station to a base station. Further, according to the type of data transmitted in the mobile communication system, data transmission methods can be classified into a method supporting only a voice service, a method supporting the voice service together with a simple data service, a method supporting only a high-speed data service, and a method supporting the high-speed data service together with the voice service. A mobile communication system supporting the data service has been developed to provide an increased amount of data to users at higher speed.

A mobile communication system supporting both the high-speed data service and the voice service provides a multimedia service using the same frequency band. In the mobile communication system, a plurality of users can simultaneously transmit data using Code Division Multiple Access (CDMA) technology. With CDMA technology, users are identified by unique numbers, which are assigned to the users. Further, in the CDMA technology, reverse data is transmitted over a packet data channel by the physical layer packet (PLP), and a length of the packet is fixed according to a data rate. The data rate is variable every packet, and a data rate of each packet is controlled according to a power of a mobile station, an mount of transmission data, and a power control bit. The power control bit is forward control information transmitted from a base station over a rate control channel (RCCH).

In order to improve reverse throughput, the mobile communication system enables retransmission in a physical layer. For the retransmission in the physical layer, a base station demodulates a received reverse data packet and transmits an ACK/NACK for a physical channel according to whether there is a packet error (for example, a cyclic redundancy check (CRC) error). If an ACK is received from the base station, a mobile station transmits a new packet, determining that the base station has successfully received the transmitted packet. However, if a NACK is received from the base station, the mobile station retransmits the previous packet, determining that the base station has failed to receive the transmitted packet.

A function of determining a data rate of a mobile station in a base station is called "scheduling." Commonly, a base station schedules the data rate of a mobile station. The base station performs scheduling using Rise-over-Thermal (RoT), which represents a ratio of thermal noises to the total reception power, and a load acquired from a received signal-to-noise ratio of a mobile station belonging to a current base transceiver system (BTS). When the RoT can be used for reverse rate control in the mobile communication system, the base station performs scheduling considering a measured RoT, an assigned load, and an available residual capacity. However, when the RoT cannot be used, the base station measures a load and performs scheduling considering the measured load and the available residual capacity. That is, a scheduler of the base station determines whether to increase, decrease, or hold a data rate of a corresponding mobile station, considering RoT, a buffer state of each mobile station, and a power state or a channel state of each mobile station.

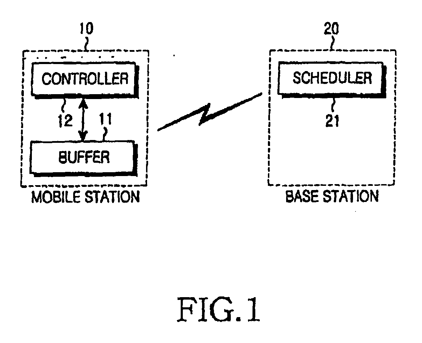

Referring to FIG. 1, a common mobile communication system employing the scheduling technique includes a mobile station (MS) 10 and a base station (BS) 20. The mobile station 10 generates information necessary for the scheduling and periodically feeds back the information to the base station 20 under the control of its controller 12. Then a scheduler 21 of the base station 20 determines a data rate for the mobile station 10, i.e., performs scheduling, using the feedback information necessary for the scheduling. A channel for transmitting the feedback information necessary for the scheduling is commonly called a "reverse request channel (R-REQCH)." The R-REQCH can be replaced with an equivalent channel in other mobile communication systems. The R-REQCH is transmitted to the base station 20 by the mobile station 10 that desires to transmit a reverse packet. Commonly, the mobile station 10 transmits the R-REQCH to the base station 20 if one of the following two conditions is satisfied. Accordingly, in addition to the following two conditions, there are other possible conditions according to mobile communication systems.

First, the mobile station 10 transmits the R-REQCH to the base station 20, if new data is input to its buffer 11 and the amount of data stored in the buffer 11 is larger than a predetermined level (BUF_DEPTH). The mobile station 10 can transmit data without transmission of the R-REQCH, if a very small amount of data that can be transmitted without separate scheduling by the base station 20 is stored in the buffer 11. Therefore, the mobile station 10 transmits the R-REQCH to the base station 20 only when the amount of data stored its buffer 11 is larger than the BUF_DEPTH. Here, the "BUF_DEPTH" represents the minimum data amount which becomes a criterion based on which the mobile station 10 determines whether to send the R-REQCH, or a scheduling request for reverse transmission, to the base station 20.

Second, the mobile station 10 transmits the R-REQCH to the base station 20, if the amount of data stored in its buffer 11 is larger than BUF_DEPTH and a time of REQCH_PRD has elapsed. The "REQCH_PRD" represents a transmission period of the R-REQCH. For example, if REQCH_PRD is 80 ms, it means that after current transmission of buffer information to the base station 20 over the R-REQCH, the mobile station 10 retransmits the R-REQCH after a lapse of 80 ms. The transmission period of the R-REQCH is predefined between the mobile station 10 and the base station 20.

From the foregoing description, it can be understood that the mobile station 10 periodically transmits the R-REQCH to the base station 20. If the mobile station 10 continuously transmits the R-REQCH to the base station 20, a reverse load increases. In order to prevent the increase in the reverse load, the mobile station 10 periodically transmits the R-REQCH to the base station 20. When the mobile station 10 periodically transmits the R-REQCH to the base station 20, the base station 20 can acquire state information, such as channel state information and buffer state information, of the mobile station 10 by periodically receiving the R-REQCH.

After receiving the buffer information, the base station 20 can trace an expected change in the residual capacity of the buffer 11 in the mobile station 10 until the next period. That is, the base station 20 determines if the amount of data stored in the buffer 11 is tending downward or upward, based on the buffer information reported from the mobile station 10. The R-REQCH is periodically transmitted because channel information of the mobile station 10 changes constantly, but the base station 20 has less information with which it can estimate the change in channel information. Therefore, an excessive increase in transmission period of the R-REQCH causes an increase in error of channel information and buffer information of the mobile station 10 that the base station 20 has. However, an excessive decrease in transmission period of the R-REQCH causes an increase in reverse load. Therefore, the base station 20 can send information on an appropriate transmission period of the R-REQCH to the mobile station 10 using a signaling message.

Table 1 illustrates an example of types of information transmitted over the R-REQCH and the number of bits assigned to each type of the information. The types of the information transmitted over the R-REQCH and the number of bits assigned to each type of the information are subject to change according to communication systems.

Table 1

| Information Field | Number of Bits |
|---|---|
| Maximum Possible Data Rate of MS | 4 |
| Amount of Data Stored in Buffer of MS | 4 |

In Table 1, a "Maximum Possible Data Rate of MS" represents information on a channel state of the mobile station 10. Commonly, the mobile station 10 is power-controlled by the base station 20. If the mobile station 10 has a poor reverse channel state, the base station 20 allows the mobile station 10 to increase power of a pilot channel. However, if the mobile station 10 has a good reverse channel state, the base station 20 allows the mobile station 10 to decrease power of a pilot channel. Therefore, a level of pilot transmission power of the power-controlled mobile station 10 at a particular time represents a channel state of the corresponding mobile station 10.

Thereafter, the mobile station 10 informs the base station 20 of absolute power of its pilot channel, or calculates a maximum packet data rate based on an absolute power level of a currently transmitted pilot channel and a margin of maximum possible transmission power of the mobile station 10. The mobile station 10 can feed back information on the calculated maximum packet data rate to the base station 20.

In both of the above two methods, the mobile station 10 feeds back its reverse channel information to the base station 20 over the R-REQCH.

In Table 1, the "Amount of Data Stored in Buffer of MS" represents the amount of data stored in the buffer 11 of the mobile station 10, i.e., represents the amount of reverse data that the mobile station 10 desires to transmit. As illustrated in Table 1, the number of bits assigned to each type of the information transmitted over the R-REQCH is limited to a particular number. For example, in Table 1, the maximum possible data rate of the mobile station 10 is represented with 4 bits, and the amount of data stored in the buffer 11 of the mobile station 10 is represented with 4 bits. 16 possible expressions are provided with 4 bits.

Table 2 illustrates an example of 16 possible buffer states that can be expressed with 4 bits.

Table 2

| Indication | Queue Size [bytes] |
|---|---|
| 0000 | 0 ~ 1241 |
| 0001 | 1242 ~ 2387 |
| 0010 | 2888 ~ 3533 |
| 0011 | 3534 ~ 4679 |
| 0100 | 4680 ~ 5825 |
| 0101 | 5826 ~ 6971 |
| 0110 | 6972 ~ 8117 |
| 0111 | 8118 ~ 9265 |
| 1000 | 9266 ~ 10409 |
| 1001 | 10410 ~ 11555 |
| 1010 | 11556 ~ 12701 |
| 1011 | 12702 ~ 13847 |
| 1100 | 13848 ~ 14994 |
| 1101 | 14995 ~ 16139 |
| 1110 | 16140 ~ 17285 |
| 1111 | 17286 ~ infinity |

In Table 2, the minimum amount of data stored in the buffer 11 is set to 0 bytes, and the maximum amount of data stored in the buffer 11 is set to 17286 bytes. Herein, the amount of data stored in the buffer 11, being larger than 17286 bytes, is expressed with '1111'. In addition, a uniform quantization method is used to divide the maximum limit of 17286 bytes by 15 and express each limit with one bit steam. For example, the mobile station 10 transmits buffer state information of '1111' to the base station 20 over the R-REQCH if the amount of data stored in its buffer 11 is 13000 bytes. Then the base station 20 receiving the buffer state information determines that the amount of data stored in the buffer 11 of the mobile station 10 falls within a range between 12702 and 13847 bytes, and the scheduler 21 in the base station 20 performs scheduling using the received buffer state information.

As described above, the mobile station 10 provides its buffer information to the base station 20 using the limited number of bits. Conventionally, however, the mobile station 10 always transmits its buffer state information in the same method without considering its channel state and a transmission period of the R-REQCH. Consequently, this constant method causes a reduction in transmission efficiency of the buffer state information. Accordingly, there have been demands for a method capable of efficiently transmitting buffer state information of the mobile station 10 to the base station 20 using the limited number of bits, with a minimized quantization error.

**SUMMARY OF THE INVENTION**

It is, therefore, an object of the present invention to provide a method for efficiently transmitting buffer state information of a mobile station using the limited number of bits, and efficiently indicating the buffer state information.

To achieve the above and other objects, there is provided a method for providing state information of a mobile station in a mobile communication system which provides a data service between the mobile station and a base station and transmits information on a maximum data rate available for the mobile station and information on the amount of data stored in a buffer of the mobile station in a reverse direction, such that the base station determines a reverse data rate of the mobile station based on channel state information transmitted in the reverse direction from the mobile station to the base station. The method includes the steps of determining information on an amount of data stored in a buffer of the mobile station based on information transmitted from the base station, including transmission period information of the information on the amount of data stored in the buffer, the information on the maximum data rate available for the mobile station, and information agreed between the base station and the mobile station; and quantizing the determined information on the amount of data stored in the buffer, and transmitting the quantized information to the base station.

**BRIEF DESCRIPTION OF THE DRAWINGS**

The above and other objects, features, and advantages of the present invention will become more apparent from the following detailed description when taken in conjunction with the accompanying drawings in which:

FIG. 1 is a block diagram illustrating a conventional mobile communication system; and
FIG. 2 is a block diagram illustrating a mobile station according to an embodiment of the present invention.

**DETAILED DESCRIPTION OF THE PREFERRED EMBODIMENT**

Preferred embodiments of the present invention will now be described in detail herein below with reference to the annexed drawings. In the following description, a detailed description of known functions and configurations incorporated herein has been omitted for conciseness.

It will be assumed herein that a mobile communication system according to an embodiment of the present invention uses an encoder packet (EP) having data rates with corresponding EP sizes as illustrated in Table 3, in order to describe a reverse data transmission method. Here, the "EP size" refers to the amount of data transmitted by one packet. In Table 3, the EP size represents an encoder packet size. The EP size is classified into a PHY EP size and an RLP EP size. The PHY EP size represents an encoder packet size of a physical (PHY) layer, and the RLP EP size represents an encoder packet size of a radio link protocol (RLP) layer. In Table 3, all packets are transmitted over 10 ms. For example, if a data rate is 38.4 Kbps, the number of bits constituting one packet is 348. Therefore, a PHY EP size becomes 384 bites. In addition, if a data rate is 76.8 Kbps, the number of bits constituting one packet is 768. Therefore, the PHY EP size becomes 768 bites. In Table 3, the RLP EP size represents a size of pure data determined by subtracting an overhead of the physical layer, i.e., CRC bits and encoder tail bits, from the PHY EP size. Commonly, an overhead of the physical layer is 24 bits. In Table 3, for the data rate of 38.4 Kbps, the RLP EP size becomes 45 bytes by subtracting the 24-bit overhead of the physical layer from the 384-bit PHY EP size. In addition, for the data rate of 76.8 Kbps, the RLP EP size becomes 93 bytes by subtracting the 24-bit overhead of the physical layer from the 768-bit PHY EP size.

In the following description, the "EP size" refers to the "RLP EP size."

Table 3

| Index | Data Rate | PHY EP size | RLP EP size |
|---|---|---|---|
| 0 | 19.2 | 192 | 21 |
| 1 | 38.4 | 384 | 45 |
| 2 | 76.8 | 768 | 93 |
| 3 | 153.6 | 1536 | 189 |
| 4 | 307.2 | 3072 | 381 |
| 5 | 460.8 | 4608 | 573 |
| 6 | 614.4 | 6144 | 765 |
| 7 | 921.6 | 9216 | 1149 |
| 8 | 1228.8 | 12288 | 1533 |
| 9 | 1536.0 | 15360 | 1917 |
| 10 | 1843.2 | 18432 | 2301 |

A method for providing state information of a mobile station, proposed by the present invention, indicates buffer information of the mobile station in a uniform quantization method, using i) channel information of the mobile station, ii) a transmission period of the buffer information, iii) a maximum data rate available for the mobile station, and iv) other information agreed between the mobile station and a base station. That is, in order to provide state information of a mobile station, the present invention indicates buffer state information of the mobile station with the limited number of bits. Herein, one or more types of information among the channel information of the mobile station, the transmission period of the buffer information, the maximum data rate available for the mobile station, and the other information agreed between the mobile station and the base station will be referred to as a "parameter."

Further, in a process of non-uniformly quantizing the buffer state information, the present invention dynamically determines a maximum limit value using i) channel information of the mobile station, ii) a transmission period of the buffer information, iii) a maximum data rate available for the mobile station, and iv) other information agreed between the mobile station and a base station.

The method for providing state information of a mobile station, proposed by the present invention, will now be described herein below. In a quantization process, a minimum limit value $BUF_{min}$ and a maximum limit value $BUF_{max}$ are defined by Equation (1) and Equation (2), respectively.

$$BUF_{min} = BUF\_DEPTH$$
$$\dotso (1)$$

$$BUF_{max} = \frac{EPsize(MIN(R_{max}, R_{max\_Limit})) \times REQCH\_PRD}{\alpha}$$
$$\dotso (2)$$

When the $BUF_{max}$ is not an integer, a rounding operation 'round( )' can be performed on the $BUF_{max}$. After the rounding operation, Equation (2) can be rewritten as shown in Equation (3).

$$BUF_{max} = round \left\{ \frac{EPsize(MIN(R_{max}, R_{max\_Limit})) \times REQCH\_PRD}{\alpha} \right\}$$
$$\dotso (3)$$

The minimum limit value $BUF_{min}$ is set to BUF_DEPTH as illustrated in Equation (1) in the quantization process because when the amount of data stored in a buffer of a mobile station is larger than BUF_DEPTH, the mobile station feeds back corresponding information to a base station, such that the mobile station is not required to a distinguish a value smaller than the BUF_DEPTH.

In Equation (2), MIN(a,b) represents a smaller one of values 'a' and 'b', i.e., represents a smaller one of $R_{max}$ and $R_{max\_Limit}$. In addition, EPsize(R) denotes an EP size corresponding to a data rate R. The EPsize(R) is determined by a data rate determined by an agreement between a mobile station and a base station as illustrated in Table 3.

In Equation (2), $R_{max}$ denotes a maximum possible data rate determined on the basis of a channel of the mobile station. Therefore, the $R_{max}$ varies on a time basis according to a channel state of the mobile station. That is, if the mobile station has a good channel state, the $R_{max}$ is increased, and if the mobile station has a poor channel state, the $R_{max}$ is decreased. The $R_{max}$ corresponds to information on a maximum possible data rate for the mobile station, the information transmitted over R-REQCH as illustrated in connection with Table 1. As described above, the $R_{max}$ can be transmitted over the R-REQCH. Alternatively, a base station can calculate the Rmax, when the R-REQCH transmits information on a transmission power level of a pilot channel of the mobile station instead of the maximum possible data rate information of the mobile station.

In Equation (2), $R_{max\_Limit}$ denotes a maximum data rate available for the mobile station. The $R_{max\_Limit}$ represents a maximum data rate that a base station granted to a mobile station based on feedback information on the maximum data rate that the mobile station can physically support. Therefore, the $R_{max\_Limit}$ is determined in an initial setup process between the mobile station and the base station, or determined through a signaling message after the initial setup process.

In Equation (2), REQCH_PRD denotes a transmission period of R-REQCH of the mobile station, and $\alpha$ denotes a value that the base station provides to the mobile station. A value of $\alpha$ is determined in the initial setup process between the mobile station and the base station, or determined through a signaling message after the initial setup process. That is, $\alpha$ corresponds to other information agreed between the mobile station and the base station, proposed by the present invention. $\alpha$ can be determined by the base station considering a reverse load of the system and the average number of retransmissions of the mobile station. $\alpha$ determined by the base station can be transmitted to the mobile station through a signaling message.

The maximum limit value id determined as shown in Equation (2) in the quantization process because data larger than the maximum limit value cannot be transmitted for a transmission period of the R-REQCH, when the determination is made based on i) the channel information $R_{max}$ of the mobile station, ii) the transmission period REQCH_PRD of the buffer information, iii) the maximum data rate $R_{max\_Limit}$ available for the mobile station, and iv) the other

information $\alpha$ agreed between the mobile station and the base station. For example, when it is assumed that $R_{max}$ = 76.8 Kbps, REQCH_PRD = 80 ms, and $R_{max\_Limit}$ = 1.2288 Mbps. $R_{max}$ = 76.8 Kbps means that the base station does not schedule a data rate higher than 76.8 Kbps for the mobile station. That is, 76.8 Kbps is a maximum data rate limit in a current channel state of the mobile station. REQCH_PRD = 80 ms indicates that after current transmission of buffer information over the R-REQCH, the mobile station retransmits the R-REQCH after a lapse of 80 ms. It is assumed herein that eight 10-ms frames are transmitted for REQCH_PRD = 80 ms. $R_{max\_Limit}$ = 1.2288 Mbps means that a maximum data rate limit of the mobile station is 1.2288 Mbps. Therefore, the base station does not schedule a data rate higher than 1.2288 Mbps. When the above-stated parameters are collectively considered with reference to Table 3, the mobile station can transmit, a maximum of 8 times, data of a 93-byte EP size corresponding to 76.8 Kbps for 80 ms before transmission of the next R-REQCH after current transmission of the R-REQCH, because 93 bytes x 10 = 930 bytes. Therefore, even though the mobile station has data of 930 bytes or more stored in its buffer, the mobile station is not required to transmit the corresponding information to the base station.

Accordingly, for the reasons described above, in a quantization process for indicating buffer information of the mobile station, the maximum limit value is represented as shown in Equation (2). A description will now be made of a process of expressing the actual amount of data stored in a buffer of the mobile station with the limited number of bits after setting the maximum limit value $BUF_{max}$ and the minimum limit value $BUF_{min}$ defined in the quantization process for indicating a buffer state of the mobile station using i) channel information of the mobile station, ii) a transmission period of the buffer information, iii) a maximum data rate available for the mobile station, and iv) other information agreed between the mobile station and a base station, illustrated in Equation (1) and Equation (2).

In the following description, it will be assumed that buffer state information of a mobile station is indicated using 4 bits. However, the present invention can be applied in the same way even when the number of bits used for expressing the buffer state information is different than 4 bits.

First, among the values capable of expressing buffer state information of a mobile station with 4 bits, the minimum value '0000' means that the amount of data stored in a buffer of the mobile station is smaller than $BUF_{min}$.

Second, among the values capable of expressing buffer state information of a mobile station with 4 bits, the maximum value '1111' means that the amount of data stored in a buffer of the mobile station is larger than $BUF_{max}$.

Third, definitions of the remaining 14 bit streams are given herein below.

In a preferred embodiment of the present invention where a uniform quantization method is used, a quantization level is defined by Equation (4). Alternatively, a non-uniform quantization method can also be applied to the present invention.

$$\frac{BUF_{max} - BUF_{min}}{14} \qquad \ldots \ldots \ldots (4)$$

That is, for the quantization process, a difference between the maximum limit value and the minimum limit value is uniformly divided by 14 (determined by subtracting two values '0000' and '1111' from 16 possible values capable of expressing buffer state information with 4 bits), and ranges of multiples of the result are expressed with '0010' to '1110'.

For example, the amount of data stored in the buffer of the mobile station is expressed as shown in Equation (5).

$$BUF_{min} \sim BUF_{min} + \frac{BUF_{max} - BUF_{min}}{14} \times 1 - 1 \qquad \ldots \ldots \ldots (5)$$

If the minimum limit value of the buffer is set to 768 bits and the maximum limit value of the buffer is set to 12288 bits, the amount of data stored in the buffer of the mobile station is expressed as '0001' between 768 and 1590 bits. If a value corresponding to the amount of data stored in the buffer of the mobile station is not an integer, the corresponding value is rounded off.

As another example, the amount of data stored in the buffer of the mobile station is expressed as shown in Equation (6).

$$BUF_{\min} + \frac{BUF_{\max} - BUF_{\min}}{14} \times 1 \sim BUF_{\min} + \frac{BUF_{\max} - BUF_{\min}}{14} \times 2 - 1 \qquad \ldots\ldots (6)$$

If the minimum limit value of the buffer is set to 768 bits and the maximum limit value of the buffer is set to 12288 bits, the amount of data stored in the buffer of the mobile station is expressed as '0010' between 1591 and 2413 bits. If a value corresponding to the amount of data stored in the buffer of the mobile station is not an integer, the corresponding value is rounded off.

As further another example, the amount of data stored in the buffer of the mobile station is expressed as shown in Equation (7).

$$BUF_{\min} + \frac{BUF_{\max} - BUF_{\min}}{14} \times 2 \sim BUF_{\min} + \frac{BUF_{\max} - BUF_{\min}}{14} \times 3 - 1 \qquad \ldots\ldots (7)$$

If the minimum limit value of the buffer is set to 768 bits and the maximum limit value of the buffer is set to 12288 bits, the amount of data stored in the buffer of the mobile station is expressed as '0011' between 2413 and 3236 bits. If a value corresponding to the amount of data stored in the buffer of the mobile station is not an integer, the corresponding value is rounded off.

As yet another example, the amount of data stored in the buffer of the mobile station is expressed as in Equation (8).

$$BUF_{\min} + \frac{BUF_{\max} - BUF_{\min}}{14} \times 13 \sim BUF_{\min} + \frac{BUF_{\max} - BUF_{\min}}{14} \times 14 - 1. \qquad \ldots\ldots (8)$$

If the minimum limit value of the buffer is set to 768 bits and the maximum limit value of the buffer is set to 12288 bits, the amount of data stored in the buffer of the mobile station is expressed as '1110' between 11465 and 12287 bits. If a value corresponding to the amount of data stored in the buffer of the mobile station is not an integer, the corresponding value is rounded off.

Fourth, the mobile station determines a bit stream corresponding to one of above three values according to the actual amount of data stored in its buffer.

If it is assumed BUF_DEPTH = 84 bits, $R_{max}$ = 153.6 Kbps, $R_{max\_Limit}$ = 1.2288 Mbps, REQCH_PRD = 8, and $\alpha$ = 2, then $BUF_{max}$ = 756 in accordance with Equation (2). Therefore, the amount of data stored in the buffer of the mobile station can be expressed as shown in Table 4.

Table 4

| Buffer Size Field | Amount of Data |
| --- | --- |
| 0001 | 84 ~ 131 |
| 0010 | 132 ~ 179 |
| 0011 | 180 ~ 227 |
| 0100 | 228 ~ 275 |
| 0101 | 276 ~ 323 |
| 0110 | 324 ~ 371 |
| 0111 | 372 ~ 419 |
| 1000 | 420 ~ 467 |

(continued)

| Buffer Size Field | Amount of Data |
|---|---|
| 1001 | 468 ~ 515 |
| 1010 | 516 ~ 563 |
| 1011 | 564 ~ 611 |
| 1100 | 612 ~ 659 |
| 1101 | 660 ~ 707 |
| 1110 | 708 ~ 755 |
| 1111 | 756 ~ infinity |

Table 4 corresponds to the embodiment in which the uniform quantization method is used. Therefore, the method for providing state information of a mobile station, proposed by the present invention, expresses the actual amount of data stored in a buffer of a mobile station with the limited number of bits, using i) channel information of the mobile station, ii) a transmission period of the buffer information, iii) a maximum data rate available for the mobile station, and iv) other information agreed between the mobile station and a base station. Accordingly, the maximum limit value $BUF_{max}$ and the minimum limit value $BUF_{min}$ are set. Thereafter, a difference between the maximum limit value and the minimum limit value is uniformly divided by 14, and ranges of multiples of the result are expressed with '0010' to '1110'.

Next, a description will be made of a method for indicating an amount of data stored in a buffer of a mobile station using an exponential quantization method, which is a typical example of a non-uniform quantization method, according to another preferred embodiment of the present invention.

It is assumed in the foregoing embodiment that BUF_DEPTH = 84 bits, $R_{max}$ = 153.6 Kbps, $R_{max\_Limit}$ = 1.2288 Mbps, REQCH_PRD = 80 ms, and $\alpha$ = 2. In accordance with Equation (1) and Equation (2), the $BUF_{min}$ and the $BUF_{max}$ are calculated as illustrated in Equation (9) and Equation (10), respectively.

$$BUF_{min} = 84 \qquad \dots\dots\dots\dots (9)$$

$$BUF_{max} = round\left\{ \frac{EPsize(MIN(R_{max}, R_{max\_Limit})) \times REQCH\_PRD}{\alpha} \right\} = 756 \qquad \dots (10)$$

Accordingly, '0000' and '1111' are defined as follows.

0000 indicates that the amount of data stored in a buffer of a mobile station is smaller than $BUF_{min}$.

1111 indicates that the amount of data stored in a buffer of a mobile station is larger than or equal to $BUF_{max}$.

0001 - 1110: For (k=1,2,···,14), is defined by Equation (11).

$$\left[ round\left\{ BUF_{min}\left(\frac{BUF_{max}}{BUF_{min}}\right)^{\frac{k-1}{14}} \right\}, round\left\{ BUF_{min}\left(\frac{BUF_{max}}{BUF_{min}}\right)^{\frac{k}{14}} \right\} \right] \qquad \dots\dots\dots (11)$$

In Equation (11), 'round( )' denotes a rounding function for rounding off a non-integer value in the parenthesis. In Equation (11), a value in the parenthesis is non-uniformly quantized in a log scale within a range between the determined $BUF_{min}$ and $BUF_{max}$.

Therefore, the amount of data stored in a buffer of a mobile station can be expressed as shown in Table 5.

Table 5

| Buffer Size Field | Amount of Data |
| --- | --- |
| 0001 | 84 ~ 97 |
| 0010 | 98 ~ 114 |
| 0011 | 115 ~ 134 |
| 0100 | 135 ~ 156 |
| 0101 | 157 ~ 183 |
| 0110 | 184 ~ 214 |
| 0111 | 215 ~ 251 |
| 1000 | 252 ~ 294 |
| 1001 | 295 ~ 344 |
| 1010 | 345 ~ 403 |
| 1011 | 404 ~ 471 |
| 1100 | 472 ~ 551 |
| 1101 | 552 ~ 643 |
| 1110 | 644 ~ 755 |
| 1111 | 756 ~ infinity |

As described above, in another embodiment of the present invention, the maximum limit value $BUF_{max}$ and the minimum limit value $BUF_{min}$ are set in accordance with Equation (1) and Equation (2), using i) channel information of the mobile station, ii) a transmission period of the buffer information, iii) a maximum data rate available for the mobile station, and iv) other information agreed between the mobile station and the base station. Thereafter, a value in the parenthesis of 'round( )' is non-uniformly quantized in a log scale within a range between the determined $BUF_{min}$ and $BUF_{max}$. If buffer state information of the mobile station is expressed after performing the non-uniform quantization in the manner described above, buffer state information of the mobile station is finely expressed in a region where the amount of data stored in the buffer of the mobile station is smaller, and buffer state information of the mobile station is roughly expressed in a region where the amount of data stored in the buffer of the mobile station is larger.Accordingly, it is possible to efficiently transmit buffer state information to the base station.

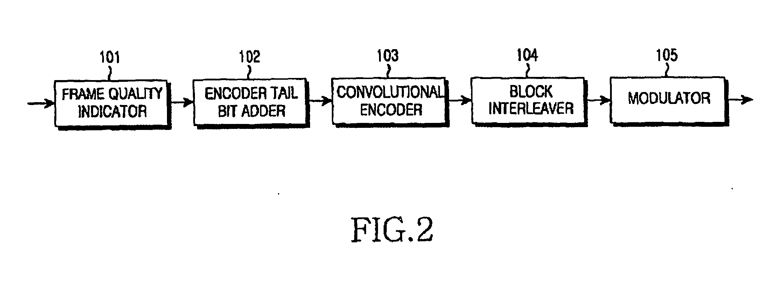

FIG. 2 is a block diagram illustrating a mobile station according to an embodiment of the present invention. The mobile station includes a transmitter for transmitting 8-bit information including information on the maximum data rate and the amount of data stored in its buffer through a reverse request channel (R-REQCH). The mobile station is identical in structure to a transmitter using a convolutional encoder. As illustrated in FIG. 2, the transmitter includes a frame quality indicator 101, an encoder tail bit adder 102, a convolutional encoder 103, a block interleaver 104, and a modulator 105. In operation, for example, 8-bit information is applied to the frame quality indicator 101. The frame quality indicator 101 adds an error detection code, for example, CRC code to the 8-bit information, and outputs CRC-added information to the encoder tail bit adder 102. The encoder tail bit adder 102 adds encoder tail bits to the CRC-added information, for convergence to a particular state, and outputs the encoder tail bit-added information to the convolutional encoder 103. The convolutional encoder 103 convolutional-encodes the encoder tail bit-added information, and the block interleaver 104 block-interleaves the convolutional-encoded information. Thereafter, the modulator 105 modulates the block-interleaved information and then transmits the modulated information to a base station over a reverse channel.

While the present invention has been shown and described with reference to certain preferred embodiments thereof, it will be understood by those skilled in the art that various changes in form and details may be made therein without departing from the spirit and scope of the present invention as defined by the appended claims.

**The following is a list of further preferred embodiments of the invention:**

Embodiment 1: A method of providing state information of a mobile station in a mobile communication system that provides a data service between the mobile station and a base station and transmits information on a maximum data rate available for the mobile station and information on an amount of data stored in a buffer of the mobile station in a reverse direction, such that the base station determines a reverse data rate of the mobile station based on channel state information transmitted in the reverse direction from the mobile station to the base station, the method comprising the steps of:

determining information on the amount of data stored in the buffer of the mobile station based on information transmitted from the base station, including transmission period information of the information on the amount of data stored in the buffer, the information on the maximum data rate available for the mobile station, and information agreed between the base station and the mobile station; quantizing the determined information on the amount of data stored in the buffer; and

transmitting the quantized information to the base station.

Embodiment 2: The method of embodiment 1, wherein step of determining information on the amount of data stored in the buffer of the mobile station comprises the step of determining a maximum limit value BUFmax and a minimum limit value BUFmin of the buffer, based on the information transmitted from the base station.

Embodiment 3: The method of embodiment 2, wherein the maximum limit value is defined as where BUFmax denotes a maximum limit value, EPsize denotes an amount of data transmitted for one packet, MIN (Rmax,Rmax_Limit) denotes a smaller one of Rmax and Rmax_Limit, REQCH_PRD denotes a transmission period of buffer information, Rmax denotes a maximum available data rate, Rmax_Limit denotes a maximum data rate available for the mobile station, and a denotes the information agreed between the base station and the mobile station.

Embodiment 4: The method of embodiment 2, wherein the minimum limit value is defined as where BUFmin denotes a minimum limit value, and BUF_DEPTH denotes the minimum amount of data stored in the buffer of the mobile station.

Embodiment 5: The method of embodiment 1, wherein the step of quantizing the determined information on the amount of data stored in the buffer comprises the steps of:
uniformly quantizing a difference between the maximum limit value and the minimum limit value; and
mapping the amount of data stored in the buffer to any one of the quantized values to indicate information on the amount of data.

Embodiment 6: The method of embodiment 1, wherein the step of quantizing the determined information on the amount of data stored in the buffer comprises the steps of:
non-uniformly quantizing a difference between the maximum limit value and the minimum limit value; and
mapping the amount of data stored in the buffer to any one of the quantized values to indicate information on the amount of data.

Embodiment 7: The method of embodiment 6, wherein the information on the amount of data stored in the buffer is finely expressed in a region where the actual amount of data stored in the buffer of the mobile station is smaller than a predetermined threshold.

Embodiment 8: The method of embodiment 6, wherein the information on the amount of data stored in the buffer is roughly expressed in a region where the actual amount of data stored in the buffer of the mobile station is larger than a predetermined threshold.

Embodiment 9: The method of embodiment 6, wherein the difference between the maximum limit value and the minimum limit value is non-uniformly quantized using a log scale within a range between the maximum limit value and the minimum limit value.

Embodiment 10: The method of embodiment 6, wherein the difference between the maximum limit value and the minimum limit value is non-uniformly quantized using a square within a range between the maximum limit value and the minimum limit value.

Embodiment 11: A method of providing buffer information to a base station by a mobile station, the method comprising the steps of:

receiving, from the base station, a parameter for transmitting the buffer information of the mobile station;

generating an indicator indicating an amount of data stored in a buffer of the mobile station using the parameter received from the base station; and

transmitting the generated indicator to the base station.

Embodiment 12: The method of embodiment 11, wherein the step of generating the indicator comprises the step of non-uniformly quantizing the amount of data in the buffer.

Embodiment 13: The method of embodiment 12, wherein the amount of data in the buffer is non-uniformly quantized using a log scale.

Embodiment 14: The method of embodiment 11, wherein the step of generating the indicator comprises the step of periodically transmitting the indicator to the base station.

Embodiment 15: The method of embodiment 11, wherein the indicator is expressed using 4 bits.

Embodiment 16: The method of embodiment 11, wherein the indicator is transmitted over a reverse request channel (R-REQCH).

Embodiment 17: The method of embodiment 11, wherein the step of transmitting the indicator comprises the steps of:

adding an error detection code and at least one encoder tail bit to the indicator;

convolutional-encoding the indicator and information added thereto;

interleaving the encoded symbols; and

modulating the interleaved symbols.

Embodiment 18: The method of embodiment 11, wherein the step of generating the indicator comprises the steps of:

generating indicators according to an amount of data using the parameter,

determining an indicator indicating the amount of data stored in the buffer among the generated indicators.

Embodiment 19: The method of embodiment 11, wherein the parameter is information agreed between the base station and the mobile station.

**Claims**

1. A method of providing buffer information to a base station by a mobile station, the method comprising the steps of:

   receiving, from the base station, at least one parameter, wherein said parameter comprises an information on the amount of data stored in the buffer (11) of the mobile station based on the information transmitted from the base station;
   generating an indicator indicating an amount of data stored in a buffer of the mobile station using an equation comprising the parameter wherein the equation is used for quantizing the amount of data; and
   transmitting the generated indicator to the base station.

2. The method of claim 1, wherein the step of generating the indicator comprises the step of non-uniformly quantizing the amount of data stored in the buffer.

3. The method of claim 2, wherein the amount of data stored in the buffer (11) is non-uniformly quantized using a log scale.

4. The method of claim 1, wherein the step of generating the indicator comprises the step of periodically transmitting the indicator to the base station (20).

5. The method of claim 1, wherein the indicator is expressed using 4 bits.

6. The method of claim 1, wherein the indicator is transmitted over a reverse request channel (R-REQCH).

7. The method of claim 1, wherein the step of transmitting the indicator comprises the steps of:

   adding an error detection code and at least one encoder tail bit to the indicator;
   convolutional-encoding the indicator and information added thereto;
   interleaving the encoded symbols; and
   modulating the interleaved symbols.

8. The method of claim 1, wherein the parameter is a channel information of the mobile station(10).

9. The method of claim 1, wherein the parameter is a transmission period of the indicator.

10. The method of claim 1, wherein the parameter is a maximum data rate available for the mobile station (10).

11. An apparatus for providing buffer information to a base station by a mobile station, the apparatus comprising:

   a receiver for receiving from the base station at least one parameter, wherein said parameter comprises an information on the amount of data stored in the buffer (11) of the mobile station based on the information transmitted from the base station;
   a controller for generating an indicator indicating an amount of data stored in a buffer of the mobile station using an equation comprising the parameter wherein the equation is used for quantizing the amount of data; and
   a transmitter for transmitting the generated indicator to the base station.

12. The apparatus of claim 11, wherein the controller non-uniformly quantizes the amount of data in the buffer.

13. The apparatus of claim 12, wherein the amount of data in the buffer is non-uniformly quantized using a log scale.

14. The apparatus of claim 11, wherein the transmitter periodically transmits the indicator to the base station.

15. The apparatus of claim 11, wherein the indicator is expressed using 4 bits.

16. The method of claim 11, wherein the indicator is transmitted over a reverse request channel (R-REQCH).

17. The apparatus of claim 11, wherein the transmitter adds an error detection code and at least one encoder tail bit to the indicator, convolutional-encodes the indicator and information added thereto, interleaves the encoded symbols, and modulates the interleaved symbols.

18. The apparatus of claim 11, wherein the parameter is a channel information of the mobile station.

19. The apparatus of claim 11, wherein the parameter is a transmission period of the indicator.

20. The apparatus of claim 11, wherein the parameter is a maximum data rate available for the mobile station.

21. A method of providing buffer information to a base station by a mobile station, the method comprising the steps of:

   receiving two parameters from a base station;
   generating a buffer size table using the two parameters, said buffer size table listing a plurality of buffer sizes and a plurality of indices, each of the plurality of buffer sizes correlated with one of the plurality of indices;
   determining an amount of data stored in a buffer of the mobile station;
   selecting an index from the plurality of indices based on the amount of data; and
   transmitting the index to the base station.

22. The method of claim 21, wherein the index is periodically transmitted to the base station.

23. The method of claim 21, wherein the index is expressed using 4 bits.

**24.** The method of claim 21, wherein the index is transmitted over a reverse request channel (R-REQCH).

**25.** The method of claim 21, wherein the two parameters include at least one of transmission period information of the information on the amount of data stored in the buffer and information on the maximum data rate available for the mobile station.

**26.** An apparatus for providing buffer information to a base station by a mobile station, the apparatus comprising:

a receiver for receiving two parameters from a base station;
a controller for generating a buffer size table using the two parameters, said buffer size table listing a plurality of buffer sizes and a plurality of indices, each of the plurality of buffer sizes correlated with one of the plurality of indices, for determining an amount of data stored in a buffer of the mobile station, and for selecting an index from the plurality of indices based on the amount of data; and
a transmitter for transmitting the index to the base station.

**27.** The apparatus of claim 26, wherein the index is periodically transmitted to the base station.

**28.** The apparatus of claim 26, wherein the index is expressed using 4 bits.

**29.** The apparatus of claim 26, wherein the index is transmitted over a reverse request channel (R-REQCH).

**30.** The apparatus of claim 26, wherein the two parameters include at least one of transmission period information of the information on the amount of data stored in the buffer and information on the maximum data rate available for the mobile station.

**31.** A method of providing buffer information to a mobile station by a base station, the method comprising the steps of:

transmitting two parameters from the base station;
receiving an index from the mobile station; and
determining an amount of data corresponding to the index that the mobile station has in a buffer,

wherein the mobile station generates a buffer size table using the two parameters, said buffer size table listing a plurality of buffer sizes and a plurality of indices, each of the plurality of buffer sizes correlated with one of the plurality of indices, determines the amount of data stored in a buffer, and selects an index from the plurality of indices based on the amount of data.

**32.** The method of claim 31, wherein the index is periodically received at the base station.

**33.** The method of claim 31, wherein the index is expressed using 4 bits.

**34.** The method of claim 31, wherein the index is received over a reverse request channel (R-REQCH).

**35.** The method of claim 31, wherein the two parameters include at least one of transmission period information of the information on the amount of data stored in the buffer and information on the maximum data rate available for the mobile station.

**36.** An apparatus for providing buffer information to a mobile station by a base station, the method comprising the steps of:

a transmitter for transmitting two parameters from the base station;
a receiver for receiving an the index from the mobile station; and
a controller for determining an amount of data corresponding to the index that the mobile station has in a buffer,

wherein the mobile station generates a buffer size table using the two parameters, said buffer size table listing a plurality of buffer sizes and a plurality of indices, each of the plurality of buffer sizes correlated with one of the plurality of indices, determines the amount of data stored in a buffer, and selects an index from the plurality of indices based on the amount of data.

**37.** The method of claim 36, wherein the index is periodically received at the base station.

**38.** The method of claim 36, wherein the index is expressed using 4 bits.

**39.** The method of claim 36, wherein the index is received over a reverse request channel (R-REQCH).

**40.** The method of claim 36, wherein the two parameters include at least one of transmission period information of the information on the amount of data stored in the buffer and information on the maximum data rate available for the mobile station.

FIG.1

FIG.2